# EUROPÄISCHE PATENTSCHRIFT

(11) **EP 1 864 567 B1**
(45) Veröffentlichungstag und Bekanntmachung des Hinweises auf die Patenterteilung: **03.06.2009**
(21) Anmeldenummer: 07108511.2
(22) Anmeldetag: 21.05.2007
(51) Int. Cl.: A01D 89/00, A01F 15/10

(54) **Gutaufnehmer**
Pick-up
Ramasseur

(30) Priorität: 10.06.2006 DE 102006027078
(43) Veröffentlichungstag der Anmeldung: 12.12.2007
(73) Patentinhaber: Maschinenfabrik Kemper GmbH & Co. KG, 48973 Stadtlohn (DE)
(72) Erfinder: Josset, Etienne, 48653, Coesfeld (DE)
(74) Vertreter: Holst, Sönke

(56) Entgegenhaltungen:
- EP-A1- 1 402 768
- DE-A1- 4 102 014
- US-A- 4 802 326

## Beschreibung

Die Erfindung betrifft einen Gutaufnehmer mit einem mehrere Zinken aufweisenden Aufnehmerrotor, der über einen eine Überlastsicherung enthaltenden Antriebsstrang in eine erste, zur Aufnahme von Erntegut vorgesehene Richtung antreibbar und reversierbar ist.

### Stand der Technik

Gutaufnehmer werden in der Landwirtschaft verwendet, um auf einem Feld liegendes Gut, das in der Regel zuvor getrocknet und in einem Schwad abgelegt wurde, aufzunehmen und einer Erntemaschine zuzuführen, in der es zu einem Ballen gepresst (Ballenpresse), - ggf. nach einem Schneidvorgang - zum Abtransport abgelegt (Ladewagen), gehäckselt (Feldhäcksler) oder ausgedroschen (Mähdrescher) wird. Derartige Gutaufnehmer umfassen üblicherweise an sich quer zur Vorwärtsrichtung erstreckenden Zinkenträgern angebrachte Zinken. Die Zinkenträger werden in Bewegung versetzt, indem sie selbst oder eine mit ihnen in Antriebsverbindung stehende, zentrische Welle in Rotation versetzt werden. Die Zinkenträger können durch Kurven- oder Nockenbahnen gesteuert werden oder sie sind ungesteuert, d. h. starr mit einer Welle verbunden. Die Zinken erstrecken sich durch Zwischenräume, die zwischen am Rahmen des Gutaufnehmers angebrachten Abstreifern verbleiben, nach außen und bewegen sich entlang dieser Zwischenräume.

Eine Überlastung des Gutaufnehmers kann bei einer Verstopfung entstehen, die durch in übermäßig großen Anhäufungen vorliegende Erntegutmengen, eine zu hohe Vortriebsgeschwindigkeit oder sich um die Zinken oder ihre Welle wickelndes Material bedingt sein kann. Um im Falle einer derartigen Überlastung unerwünschte Beschädigungen des Gutaufnehmers zu verhindern, wurden Überlastsicherungen (DE 299 17 991 U) vorgeschlagen, die im Überlastfall den Antriebsstrang des Gutaufnehmers auftrennen.

Bei gebräuchlichen Gutaufnehmern ist in den Antriebsstrang des Gutaufnehmers ein Freilauf eingefügt. Der Gutaufnehmer kann somit nicht reversiert werden, um zu verhindern, dass die Zinken des Gutaufnehmers sich bei reversiertem Antrieb mit den Abstreifern oder dem rückwärtig der Abstreifer angeordneten Teilen des Gehäuses des Gutaufnehmers verhaken. Die üblicherweise stromab des Gutaufnehmers angeordnete Querförderschnecke ist aber reversierbar (s. DE 198 47 891 A). Die fehlende Reversiermöglichkeit des Gutaufnehmers führt dazu, dass Verstopfungen durch das Reversieren nicht immer hinreichend beseitigt werden können. Der Bediener muss dann seinen Arbeitsplatz verlassen und die Verstopfung manuell entfernen.

Die nach dem Anmeldetag des vorliegenden Schutzrechts veröffentlichte DE 10 2005 020 463 A schlägt vor, im rückwärtigen Bereich der Zinken eine Leiteinrichtung vorzusehen, die die Zinken bei einem Reversieren des Aufnahmerotors in die Zwischenräume zwischen den Abstreifern leitet. Durch diese Maßnahme kann auch der Aufnehmerrotor reversiert werden. Sollte sich dennoch beim Reversieren ein Zinken an der Leiteinrichtung verhaken, sind bei Abschaltmomenten der an sich bekannten Überlastsicherungen mögliche Beschädigungen des Gutaufnehmers denkbar.

In der EP 1 402 768 A wird ein reversierbarer Gutaufnehmer beschrieben, in dessen Antriebsstrang eine Überlastkupplung eingefügt ist. Im Fall einer Überlastung der Überlastkupplung, die durch einen Gutstau ausgelöst werden kann, erzeugt diese ein Geräusch, das eine Abschaltung des Antriebsstrangs bewirkt. Das Abschaltmoment der Überlastkupplung ist in beiden Drehrichtungen gleich.

In der DE 41 02 014 A wird eine handgeführte Elektrowerkzeugmaschine beschrieben, die ein schrägverzahntes Antriebsritzel und Vorgelegezahnrad aufweist. Um die von der Drehrichtung abhängigen Abschaltmomente von der Drehrichtung unabhängig zu gestalten oder in einer Drehrichtung größer als in der anderen Drehrichtung werden zu lassen, werden die Profile einer Überlastkupplung unsymmetrisch ausgestaltet.

Die US 4 802 326 A beschreibt eine Überlastkupplung, die sich insbesondere für landwirtschaftliche Maschinen eignet. Bei einer Ausführungsform ist in einer Drehrichtung ein Freilauf vorgesehen.

### Aufgabe

Das der Erfindung zu Grunde liegende Problem wird darin gesehen, einen Gutaufnehmer mit einem reversierbaren Aufnehmerrotor bereitzustellen, bei dem Beschädigungen des Aufnehmerrotors und der Zinken beim Reversieren nicht oder nur in vermindertem Maße zu befürchten sind.

Dieses Problem wird erfindungsgemäß durch die Lehre des Patentanspruchs 1 gelöst, wobei in den weiteren Patentansprüchen Merkmale aufgeführt sind, welche die Lösung in vorteilhafter Weise weiterentwickeln.

Der Aufnehmerrotor ist reversierbar antreibbar, um eventuelle Verstopfungen leichter abfördern zu können. Die Überlastsicherung hat bei reversiertem Antrieb des Aufnehmerrotors ein kleineres Abschaltmoment als beim Antrieb in der ersten, im normalen Erntebetrieb verwendeten Richtung.

Auf diese Weise werden unerwünschte Beschädigungen des Aufnehmerrotors und der Zinken z. B. durch mitgeführtes Erntegut oder durch sich mit dem Gehäuse des Aufnehmerrotors verhakende Zinken beim Reversieren verhindert. Im Erntebetrieb wird der Aufnehmerrotor auch abgesichert, aber mit einem größeren Abschaltmoment, so dass die Erntegutförderung nicht durch eine zu schnell ansprechende Überlastsicherung behindert wird.

Der Aufnehmerrotor ist vorzugsweise drehbar angeordnet. Es sind aber auch Ausführungsformen mit linear beweglichen Aufnehmerrotoren denkbar, die beispielsweise um angetriebene oder frei mitlaufende Umlenkräder umlaufende Kettenförderer oder Förderbänder mit Zinken umfassen.

Die Überlastsicherung schließt bei einer bevorzugten Ausführungsform der Erfindung den Antriebsstrang nach dem Ende der Überlastung selbsttätig. Es kommen dafür insbesondere Nockenschaltkupplungen mit einem äußeren Ring mit Vertiefungen mit asymmetrischen Steigungen und in die Vertiefungen eingreifenden, durch Federn nach außen vorgespannten Stiften in Frage.

### Ausführungsform

In den Zeichnungen ist ein nachfolgend näher beschriebenes Ausführungsbeispiel der Erfindung dargestellt. Es zeigt:
- Fig. 1: eine Seitenansicht eines Feldhäckslers mit einem Gutaufnehmer,
- Fig. 2: eine perspektivische Ansicht des Aufnehmerrotors des Gutaufnehmers mit den daran befestigten Zinken,
- Fig. 3: ein Schema des Antriebsstrangs des Gutaufnehmers, und
- Fig. 4: eine Schnittzeichnung durch die Überlastsicherung des Aufnehmerrotors.

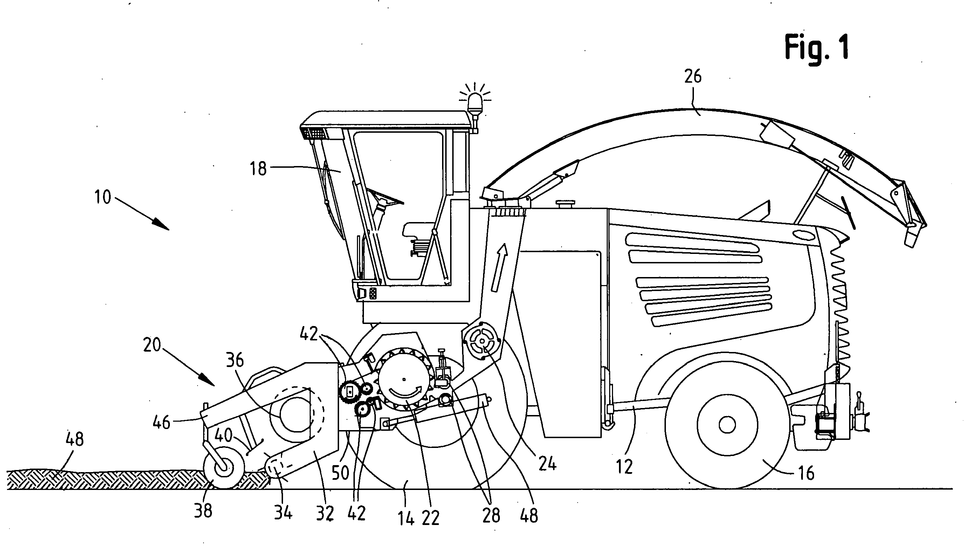

In der Figur 1 ist eine Erntemaschine 10 in der Art eines selbstfahrenden Feldhäckslers dargestellt. Die Erntemaschine 10 baut sich auf einem Rahmen 12 auf, der von vorderen angetriebenen Rädern 14 und lenkbaren rückwärtigen Rädern 16 getragen wird. Die Bedienung der Erntemaschine 10 erfolgt von einer Fahrerkabine 18 aus, von der aus ein Erntevorsatz in Form eines Gutaufnehmers 20 einsehbar ist. Mittels des Gutaufnehmers 20 vom Boden aufgenommenes Erntegut, z. B. Gras oder dergleichen wird über einen Einzugsförderer 42 mit Vorpresswalzen, die innerhalb eines Einzugsgehäuses 50 an der Frontseite des Feldhäckslers 10 angeordnet sind, einer Häckseltrommel 22 zugeführt, die es in kleine Stücke häckselt und es einer Fördervorrichtung 24 aufgibt. Das Gut verlässt die Erntemaschine 10 zu einem nebenher fahrenden Anhänger über einen um eine etwa vertikale Achse drehbaren und in der Neigung verstellbaren Austragschacht 26. Zwischen der Häckseltrommel 22 und der Fördervorrichtung 24 erstreckt sich eine Nachzerkleinerungsvorrichtung 28 mit zwei Körnerprozessorwalzen, durch die das zu fördernde Gut der Fördervorrichtung 24 tangential zugeführt wird.

Der Gutaufnehmer 20 ist als so genannte Pick-Up ausgebildet. Der Gutaufnehmer 20 baut sich auf einem Gestell 32 auf und stützt sich über beidseitig angebrachte Stützräder 38, die über je einen Träger 46 am Gestell 32 befestigt sind, auf dem Erdboden ab. Die Aufgabe des Gutaufnehmers 20 besteht darin, auf dem Boden eines Felds in einem Schwad 48 abgelegtes Erntegut aufzunehmen und es der Erntemaschine 10 zur weiteren Bearbeitung zuzuführen. Hierzu wird der Gutaufnehmer 20 während des Erntebetriebes mit geringem Abstand zum Erdboden über das Feld bewegt, während er zum Transport auf einer Strasse oder auf Wegen mittels eines Hydraulikzylinders 48 angehoben wird, welcher das Einzugsgehäuse 50 und den daran befestigten Gutaufnehmer 20 um die Drehachse der Häckseltrommel 22 verschwenkt. Der Hydraulikzylinder 48 dient auch zur Einstellung der Höhe des Gutaufnehmers 20 über dem Boden, bzw. zur Einstellung des Auflagedrucks der Stützräder 38 auf dem Erdboden. Zum Gutaufnehmer 20 gehört ein Abgabeförderer 36 in Form einer Förderschnecke, die das aufgenommene Gut von den Seiten des Gutaufnehmers 20 zu einer in der Mitte gelegenen, nicht gezeigten Abgabeöffnung fördert, hinter der der Einzugsförderer 42 folgt. Der Gutaufnehmer 20 weist auch einen, wie auch der Abgabeförderer 36, rotativ angetriebenen Aufnehmerrotor 34 auf, der unterhalb des Abgabeförderers 36 angeordnet ist und mit seinen Förderzinken das Gut vom Erdboden anhebt, um es dem Abgabeförderer 36 zu übergeben. Außerdem ist ein Niederhalter 40 in Form eines über dem Aufnehmerrotor 34 angeordneten Bleches am Gestell 32 befestigt.

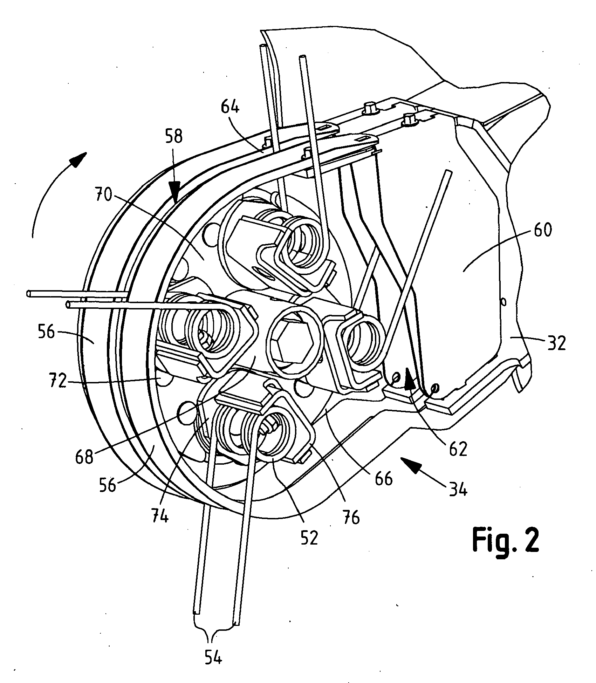

Im Folgenden beziehen sich Richtungsangaben, wie seitlich, unten und oben, auf die Vorwärtsbewegungsrichtung V des Gutaufnehmers 20, die in den Figuren 1 und 2 nach links verläuft.

Der in der Figur 2 detaillierter dargestellte Aufnehmerrotor 34 umfasst eine zentrale, zylindrische Welle 68, die sich über die Breite des Gutaufnehmers 20 erstreckt und an ihren Enden am Gestell 32 des Gutaufnehmers 20 drehbar gelagert ist. Über die Länge der Welle 68 sind mehrere koaxial zur Welle 68 angeordnete, kreisförmige Halterungselemente 70 mit einer Vielzahl gleichmäßig um den Umfang der Welle 68 verteilter Bohrungen 72 befestigt, die parallel zur Welle 68 verlaufen. In den Bohrungen 72 sind Lagerungen 74 angeordnet. Axial durch die Lagerungen 74 erstrecken sich Schrauben, deren Gewinde in entsprechende Gewinde in den Enden U-förmiger Zinkenträger 76 eingeschraubt sind, die sich parallel zur Welle 68 erstrecken. Durch die Schrauben und die Lagerungen 74 sind die Zinkenträger 76 um ihre Längsachse drehbar am Halterungselement 70 festgelegt. Es sind auf jeder Seite des Halterungselements 70 vier Zinkenträger 76 angeordnet.

An den Zinkenträgern 76 sind die Zinken 54 befestigt, die aus federndem Material hergestellt sind und einen spiralförmigen Abschnitt 52 umfassen, der mit dem Zinkenträger 76 verbunden ist und an dessen Enden sich nach außen erstreckende Abschnitte vorgesehen sind. Die Zinken 54 erstrecken sich durch Schlitze 58, die zwischen mit dem Gestell 32 verbundenen Abstreifern 56 verbleiben und sind eingerichtet, Erntegut aufzunehmen und nach oben hinten zu fördern, wenn der Gutaufnehmer 20 über ein Feld bewegt wird. Dazu ist die Welle 68 mit einem Antrieb gekoppelt, der sie in Drehung versetzt. Die Zinkenträger 76 mit den Zinken 54 werden über die Welle 68, das drehfest mit der Welle 68 verbundene Halterungselement 70 und die Lagerungen 74 angetrieben, so dass sie sich um die Welle 68 drehen. Die Winkelstellung der Zinkenträger 76 gegenüber der Welle 68 wird an den äußeren Enden durch an sich bekannte Einrichtungen (Exzentersteuerungen bzw. Kurvenbahnen) gesteuert. Es sind aber auch Ausführungsformen mit nicht gesteuerten Zinken 54 denkbar, bei denen die Zinkenträger 76 starr am Halterungselement 70 befestigt sind.

In einem bezüglich der Vorwärtsrichtung V rückwärts des Aufnehmerrotors 34 liegenden Bereich sind an diesen bzw. an die Abstreifer 56 angrenzend Leiteinrichtungen 60 vorgesehen. Diese Leiteinrichtungen 60 setzen sich aus einer Mehrzahl einzelner, sich etwa vertikal und in Vorwärtsrichtung erstreckender Leitbleche zusammen, die zwischen sich Führungsbahnen 62 bilden. Die Leiteinrichtungen 60 sind derart ausgerichtet, dass sich die von ihnen eingeschlossenen Führungsbahnen 62 in Richtung eines oberen, geöffneten Endbereichs 64 der Schlitze 58 zwischen den Abstreifern 56 verengen und in Richtung eines unteren, geöffneten Endbereichs 66 der Schlitze 58 erweitern.

Die Leiteinrichtungen 60 tragen dazu bei, dass die Zinken 54 im Falle einer Reversierung des Aufnehmerrotors 34 geführt werden und in die Schlitze 58 zwischen den Abstreifern 56 eintreten, ohne zu verhaken.

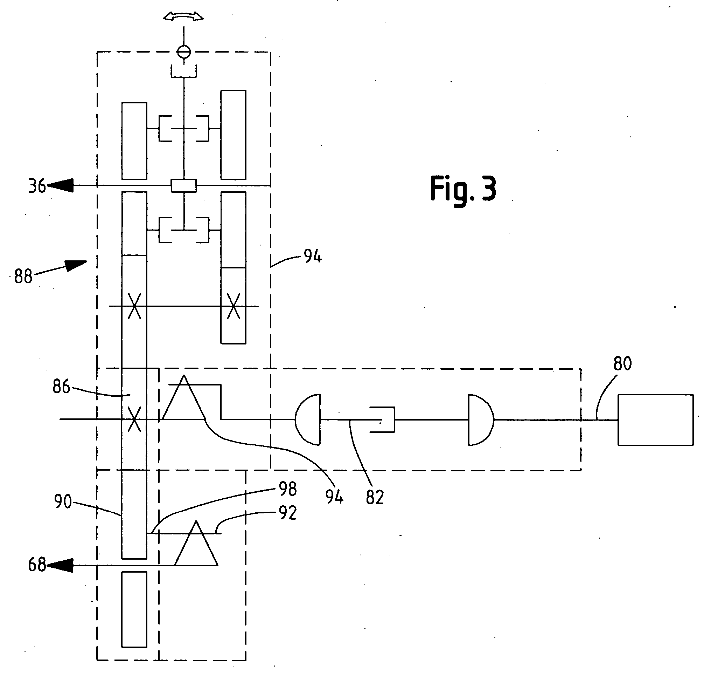

Die Figur 3 zeigt schematisch den Antriebsstrang des Gutaufnehmers 20. Eine Welle 80 ist mit einer Abtriebswelle der Erntemaschine 10 verbunden. Die Welle 80 wird beim Erntebetrieb vorzugsweise mit konstanter oder von der jeweiligen Vortriebsgeschwindigkeit der Erntemaschine 10 abhängiger Geschwindigkeit angetrieben. Die Welle 80 ist weiterhin reversierbar antreibbar, um auf eine Bedienereingabe hin und/oder selbsttätig nach Ansprechen eines geeigneten Sensors zur Erkennung eines Gutstaus und/oder mit dem Erntegut mitgeführter Fremdkörper eventuelle Gutstaus beseitigen zu können. Beim Reversieren wird die Welle 80 insbesondere durch einen Reversiermotor angetrieben, der auch den Einzugsförderer 42 reversiert. Mögliche Ausführungsformen für den Antrieb der Welle 80 durch die Erntemaschine 10 sind in den Druckschriften DE 198 12 500 A, DE 199 18 550 A, DE 102 41 216 A, DE 10 2004 029 953 A und DE 10 2004 039 462 A offenbart, deren Offenbarungen durch Verweis mit in die vorliegenden Unterlagen aufgenommen werden.

Die Welle 80 ist über eine teleskopierbare Gelenkwelle 82 mit einer zentralen Überlastsicherung 84 verbunden, die insbesondere als Rutschkupplung oder Nockenschaltkupplung ausgeführt ist. Die zentrale Überlastsicherung 84 ist ausgangsseitig mit einem Zahnrad 86 verbunden, das zum einen mit einem Schaltgetriebe 88 in Antriebsverbindung steht, welches den Abgabeförderer 36 antreibt. Durch das Schaltgetriebe 88, das auch durch ein stufenlos verstellbares Getriebe ersetzt werden könnte, wird der Abgabeförderer 36 mit einer wählbaren Geschwindigkeit angetrieben. Zum anderen treibt das Zahnrad 86 über ein weiteres Zahnrad 90 und eine dem Aufnehmerrotor 34 zugeordnete Überlastsicherung 92 die Welle 68 an. Die zentrale Überlastsicherung 84, die Zahnräder 86 und 90, das Schaltgetriebe 88 und die dem Aufnehmerrotor 34 zugeordnete Überlastsicherung 92 sind innerhalb eines gemeinsamen Gehäuses 94 angeordnet. Zwischen dem Ausgang des Schaltgetriebes 88 und dem Abgabeförderer 36 könnten in an sich bekannter Weise ein Kettenantrieb (nicht gezeigt) oder beliebige andere Antriebselemente angeordnet sein. Auch zwischen dem Ausgang der dem Aufnehmerrotor 34 zugeordneten Überlastsicherung 92 und dem Aufnehmerrotor 34 könnten in an sich bekannter Weise ein Kettenantrieb (nicht gezeigt) oder beliebige andere Antriebselemente angeordnet sein. Anzumerken ist weiterhin, dass der Antrieb des Abgabeförderers 36 vom Antrieb des Aufnehmerrotors 34 getrennt werden könnte, wie in der DE 10 2004 029 953 A und DE 10 2004 059 064 A und dem in diesen beiden Schriften zitierten Stand der Technik beschrieben, deren Offenbarungen durch Verweis mit in die vorliegenden Unterlagen aufgenommen werden.

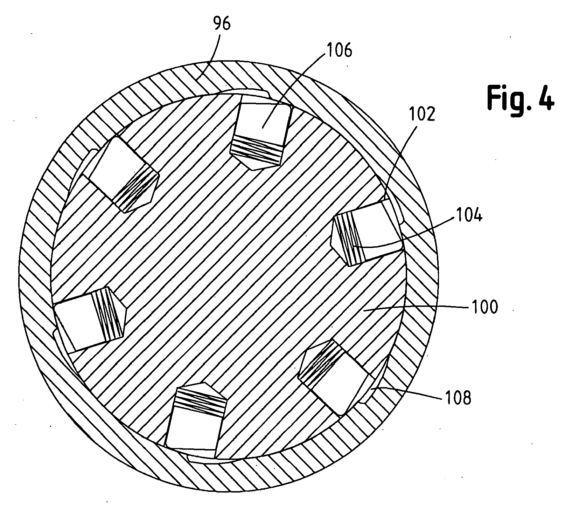

Die dem Aufnehmerrotor 34 zugeordnete Überlastsicherung 92 ist in der in Figur 4 dargestellten Ausführungsform als Nockenschaltkupplung ausgestaltet, die einen äußeren Ring 96, der über eine Hohlwelle 98 mit dem Zahnrad 90 verbunden ist, und eine innere Welle 100 umfasst. Die Welle 100 umfasst um ihren Umfang verteilte Bohrungen 102, in denen durch Federn 104 radial bewegliche, nach außen vorgespannte Nocken 106 angeordnet sind. An der Innenseite des Rings 96 sind sägezahnförmige Vertiefungen 108 mit unterschiedlichen, asymmetrischen Steigungen an den in Drehrichtung linken und rechten Flanken angebracht, mit denen die radial äußeren Flächen der Nocken 106 zusammenwirken. Durch die Asymmetrie der Steigungen der Vertiefungen 108 erreicht man, dass das Abschaltmoment der dem Aufnehmerrotor 34 zugeordneten Überlastsicherung 92 wesentlich größer ist, wenn sich der Ring 96 in Figur 4 im Gegenuhrzeigersinn dreht, als wenn er sich im Uhrzeigersinn dreht. Die Drehrichtung im Gegenuhrzeigersinn entspricht dem normalen Erntebetrieb, während die Drehrichtung im Uhrzeigersinn dem Reversierbetrieb entspricht.

Das Abschaltmoment der dem Aufnehmerrotor 34 zugeordneten Überlastsicherung 92 ist somit im normalen Erntebetrieb wesentlich (z. B. um einen Faktor von etwa 10) größer als beim Reversierbetrieb. Dadurch vermeidet man mögliche Beschädigungen des Aufnehmerrotors 34, insbesondere falls sich die Zinken 54 beim Reversieren an den Abstreifern 56 oder an den Leiteinrichtungen 60 verhaken sollten. Außerdem ist das Abschaltmoment der dem Aufnehmerrotor 34 zugeordneten Überlastsicherung 92 kleiner als das Abschaltmoment der zentralen Überlastsicherung 84.

Schließlich bleibt anzumerken, dass beliebige andere Ausführungsformen der dem Aufnehmerrotor 34 zugeordneten Überlastsicherung 92 denkbar sind. Geeignete unsymmetrische Überlastsicherungen sind z. B. in den Druckschriften DE 41 02 014 A und US 3 187 865 A offenbart, deren Inhalt durch Verweis mit in die vorliegenden Unterlagen aufgenommen wird. Außerdem könnte das Zahnrad 90 über eine erste (beliebig, z. B. als Rutschkupplung oder Nockenschaltkupplung ausgeführte) Überlastsicherung mit einem relativ geringen, dem Abschaltmoment der Überlastsicherung 92 beim Reversieren entsprechenden Abschaltmoment mit der Welle 68 verbunden werden. Parallel dazu kann das Zahnrad 90 über einen Freilauf, der nur beim Erntebetrieb ein Drehmoment überträgt, mit einer zweiten (beliebig, z. B. als Rutschkupplung oder Nockenschaltkupplung ausgeführte) Überlastsicherung verbunden werden, die ihrerseits ebenfalls mit der Welle 68 verbunden ist. Die zweite Überlastsicherung hat ein Abschaltmoment, das etwa dem Abschaltmoment der Überlastsicherung 92 beim Erntebetrieb (bzw. diesem Drehmoment minus dem Drehmoment der ersten Überlastsicherung) entspricht.

## Patentansprüche

1. Gutaufnehmer (20) mit einem mehrere Zinken (54) aufweisenden Aufnehmerrotor (34), der über einen eine Überlastsicherung (92) enthaltenden Antriebsstrang in eine erste, zur Aufnahme von Erntegut vorgesehene Richtung antreibbar und reversierbar ist, **dadurch gekennzeichnet, dass** die Überlastsicherung (92) bei reversierendem Antrieb des Aufnehmerrotors (34) ein kleineres Abschaltmoment als beim Antrieb in der ersten Richtung hat.

2. Gutaufnehmer (20) nach Anspruch 1, **dadurch gekennzeichnet, dass** der Aufnehmerrotor (34) drehbar ist.

3. Gutaufnehmer (20) nach Anspruch 1 oder 2, **dadurch gekennzeichnet, dass** die Überlastsicherung (92) den Antriebsstrang nach dem Ende einer Überlastung selbsttätig schließt.

4. Gutaufnehmer (20) nach Anspruch 3, **dadurch gekennzeichnet, dass** die Überlastsicherung (92) eine asymmetrische Nockenschaltkupplung ist.

5. Landwirtschaftliche Erntemaschine (10), vorzugsweise in der Art eines Feldhäckslers, eines Ladewagens, eines Mähdreschers oder einer Ballenpresse, mit einem Gutaufnehmer (20) gemäß einem der Ansprüche 1 bis 4.

## Claims

1. Pickup (20) with a pickup rotor (34) which has a plurality of prongs (54) and can be driven via a drive train containing an overload protection means (92) in a first direction, which is provided for picking up crop, and can be reversed, **characterized in that** the overload protection means (92) has a smaller switching-off moment when the pickup rotor (34) is driven in reverse than when it is driven in the first direction.

2. Pickup (20) according to Claim 1, **characterized in that** the pickup rotor (34) is rotatable.

3. Pickup (20) according to Claim 1 or 2, **characterized in that** the overload protection means (92) automatically closes the drive train at the end of an overload.

4. Pickup (20) according to Claim 3, **characterized in that** the overload protection means (92) is an asymmetrical cam-operated clutch.

5. Agricultural harvester (10), preferably in the manner of a forage harvester, a self-loading forage box, a combine harvester or a baler, with a pickup (20) according to one of Claims 1 to 4.

## Revendications

1. Ramasseur (20) comprenant un rotor de ramasseur (34) présentant plusieurs dents (54), lequel peut être entraîné et inversé par le biais d'un ensemble de transmission contenant un dispositif de sécurité contre les surcharges (92) dans une première direction prévue pour ramasser des plantes de récolte, **caractérisé en ce que** le dispositif de sécurité contre les surcharges (92), lors de l'entraînement inversé du rotor de ramasseur (34) a un plus petit couple de coupure que lors de l'entraînement dans la première direction.

2. Ramasseur (20) selon la revendication 1, **caractérisé en ce que** le rotor de ramasseur (34) est rotatif.

3. Ramasseur (20) selon la revendication 1 ou 2, **caractérisé en ce que** le dispositif de sécurité contre les surcharges (92) ferme automatiquement l'ensemble de transmission à la fin d'une surcharge.

4. Ramasseur (20) selon la revendication 3, **caractérisé en ce que** le dispositif de sécurité contre les surcharges (92) est un embrayage à commande de cames asymétrique.

5. Machine de récolte agricole (10), de préférence de type faucheuse-hacheuse, remorque chargeuse, moissonneuse-batteuse ou presse à balles, comprenant un ramasseur (20) selon l'une quelconque des revendications 1 à 4.
